# EUROPÄISCHE PATENTSCHRIFT

(11) **EP 3 508 704 B1**
(45) Veröffentlichungstag und Bekanntmachung des Hinweises auf die Patenterteilung: **02.06.2021**
(21) Anmeldenummer: 19150280.6
(22) Anmeldetag: 04.01.2019
(51) Int. Cl.: F01N 3/10, F01N 3/021, F01N 3/035, F01N 3/025, F01N 3/22, F01N 3/20, F01N 13/00

(54) **ABGASNACHBEHANDLUNGSSYSTEM UND VERFAHREN ZUR ABGASNACHBEHANDLUNG EINES VERBRENNUNGSMOTORS**
WASTE GAS TREATMENT SYSTEM AND METHOD FOR TREATING THE WASTE GAS OF A COMBUSTION ENGINE
SYSTÈME DE RETRAITEMENT DES GAZ D'ÉCHAPPEMENT ET PROCÉDÉ DE RETRAITEMENT DES GAZ D'ÉCHAPPEMENT D'UN MOTEUR À COMBUSTION INTERNE

(30) Priorität: 08.01.2018 DE 102018100240
(43) Veröffentlichungstag der Anmeldung: 10.07.2019
(73) Patentinhaber: VOLKSWAGEN AKTIENGESELLSCHAFT, 38440 Wolfsburg (DE)
(72) Erfinder: Paukner, Stefan, 38442 Wolfsburg (DE); Baron von Ceumern-Lindenstjerna, Falk-Christian, 38124 Braunschweig (DE)
(74) Vertreter: Gulde & Partner

(56) Entgegenhaltungen:
- EP-A1- 3 502 428
- DE-A1-102012 011 603
- DE-A1-102012 021 573
- DE-A1-102016 206 394
- US-A1- 2011 219 752

## Beschreibung

Die Erfindung betrifft ein Verfahren zur Abgasnachbehandlung eines Verbrennungsmotors gemäß den Oberbegriffen des unabhängigen Patentanspruchs.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Solche Rußpartikel entstehen besonders nach einem Kaltstart des Verbrennungsmotors aufgrund einer unvollständigen Verbrennung in Kombination mit einem überstöchiometrischen Verbrennungsluftverhältnis sowie kalter Zylinderwände während des Kaltstarts. Die Kaltstartphase ist somit maßgeblich für die Einhaltung der gesetzlich vorgeschriebenen Partikelgrenzwerte. Im Fahrbetrieb wird ein solcher Ottopartikelfilter weiter mit Ruß beladen. Damit der Abgasgegendruck nicht zu stark ansteigt, muss dieser Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann.

Aufgrund der guten Wirkungsgrade beim Ottomotor ist eine Regeneration eines Partikelfilters in Unterbodenposition in bestimmten Betriebssituationen unmöglich, sodass die Regeneration eines Partikelfilters in Unterbodenlage spezieller Fahrzyklen bedarf. Eine motornahe Positionierung des Partikelfilters ist günstig, da dadurch höhere Abgastemperaturen am Partikelfilter vorliegen und das Aufheizen auf eine Regenerationstemperatur erleichtert wird. Ein weiteres Problem bei Drei-Wege-Katalysatoren mit einer drei-Wege-katalytisch wirksamen Beschichtung, sogenannten Vier-Wege-Katalysatoren, ist die Tatsache, dass die Beschichtung starke Alterungserscheinungen aufweisen kann, sodass für die Konvertierung der gasförmigen Schadstoffe ein zusätzlicher Drei-Wege-Katalysator in motornaher Lage erforderlich sein kann.

Aus der DE 10 2008 036 127 A1 ist ein Verfahren zur Abgasnachbehandlung eines Verbrennungsmotors bekannt, in dessen Abgaskanal ein Partikelfilter und ein Drei-Wege-Katalysator angeordnet sind. Dabei ist der Partikelfilter als erste Komponente der Abgasnachbehandlung stromabwärts eines Auslasses des Verbrennungsmotors angeordnet. Stromabwärts des Partikelfilters ist ein Drei-Wege-Katalysator angeordnet. Dabei wird der Sauerstoffgehalt im Abgas zur Regeneration des Partikelfilters über eine Lambdaregelung des Drei-Wege-Katalysators erhöht.

Die DE 10 2010 046 747 A1 offenbart ein Abgasnachbehandlungssystem für einen Ottomotor sowie ein Verfahren zur Abgasnachbehandlung. Dabei ist stromabwärts eines Drei-Wege-Katalysators ein Partikelfilter angeordnet, wobei zur Regeneration der im Partikelfilter zurückgehaltenen Rußpartikel ein Sekundärluftsystem bereitgestellt werden kann, welches stromabwärts des Drei-Wege-Katalysators und stromaufwärts des Partikelfilters Frischluft in die Abgasanlage einbläst.

Die DE 10 2012 021 573 A1 offenbart einen Verbrennungsmotor mit einer Abgasanlage, wobei in der Abgasanlage eine Turbine eines Abgasturboladers, stromabwärts der Turbine ein erster Drei-Wege-Katalysator und weiter stromabwärts ein zweiter Drei-Wege-Katalysator angeordnet sind. Dabei ist ein Abgasbrenner vorgesehen, mit welchem stromabwärts der Turbine und stromaufwärts des ersten Drei-Wege-Katalysators ein heißes Brennerabgas in die Abgasanlage eingeleitet werden kann, um die Drei-Wege-Katalysatoren aufzuheizen.

Aus der DE 10 2016 206 394 A1 ist ein Verbrennungsmotor mit einer zweiflutigen Abgasanlage bekannt, wobei in jeder der Abgasfluten ein erster Drei-Wege-Katalysator und stromabwärts des jeweils ersten Drei-Wege-Katalysators ein zweiter Drei-Wege-Katalysator angeordnet ist. Dabei ist ein Abgasbrenner vorgesehen, mit welchem beide Abgasfluten gemeinsam aufgeheizt werden können.

Ferner offenbart die DE 10 2012 011 603 A1 eine Abgasanlage für einen fremdgezündeten Verbrennungsmotor, in welcher ein HC-Adsorber sowie ein dem HC-Adsorber nachgeschalteter Katalysator angeordnet sind. Dabei ist stromabwärts des HC-Adsorbers und stromaufwärts des Katalysators ein Abgasbrenner angeordnet.

EP 3 502 428 A1, welcher als Stand der Technik gemäß Artikel 54(3) EPÜ gilt, offenbart ein Abgasnachbehandlungssystem für einen Verbrennungsmotor mit einer Abgasanlage, in dessen Abgaskanal ein Drei-Wege-Katalysator und ein Vier-Wege-Katalysator angeordnet sind, wobei unmittelbar stromaufwärts des Vier-Wege-Katalysators eine Einleitstelle vorgesehen ist, an welcher die heißen Abgase eines Abgasbrenners des Abgasnachbehandlungssystems zur Erwärmung des Vier-Wege-Katalysators in die Abgasanlage einleitbar sind.

Aufgabe der Erfindung ist es, in allen Fahrzyklen das Erreichen einer Regenerationstemperatur des Partikelfilters sicherzustellen und eine möglichst emissionsfreie Regeneration des Partikelfilters zu ermöglichen. Ferner sollen das Alterungsverhalten des Abgasnachbehandlungssystems verbessert und die aus dem Stand der Technik bekannten Nachteile überwunden werden.

In einer bekannten Lösung wird diese Aufgabe durch ein Abgasnachbehandlungssystem für einen Verbrennungsmotor mit einer Abgasanlage gelöst, welche mit einem Auslass des Verbrennungsmotors verbunden ist. Dabei umfasst die Abgasanlage einen Abgaskanal, in dem in Strömungsrichtung eines Abgases des Verbrennungsmotors durch den Abgaskanal als erste emissionsmindernde Komponente ein motornaher Drei-Wege-Katalysator und stromabwärts des motornahen Drei-Wege-Katalysators ein Vier-Wege-Katalysator oder eine Kombination aus einem Partikelfilter und einem dem Partikelfilter nachgeschalteten zweiten Drei-Wege-Katalysator angeordnet sind. Das Abgasnachbehandlungssystem umfasst ferner eine Sekundärluftpumpe und einen Abgasbrenner, wobei stromabwärts des motornahen Drei-Wege-Katalysators und stromaufwärts des Vier-Wege-Katalysators oder des Partikelfilters mindestens eine Einleitstelle vorgesehen ist, an welcher die heißen Abgase des Abgasbrenners zur Erwärmung des Vier-Wege-Katalysators oder des Partikelfilters in die Abgasanlage einleitbar sind. Unter einer motornahen Anordnung des Drei-Wege-Katalysators ist in diesem Zusammenhang eine Anordnung der Abgasnachbehandlungskomponenten mit einer Abgaslauflänge von weniger als 80 cm, insbesondere von weniger als 50 cm, besonders bevorzugt von weniger als 35 cm ab einem Auslass des Verbrennungsmotors zu verstehen. Dadurch ist eine beschleunigte Aufheizung des Drei-Wege-Katalysators, insbesondere nach einem Kaltstart des Verbrennungsmotors, möglich. Durch die motornahe Position des Drei-Wege-Katalysators geht weniger Abwärme über die Wände des Abgaskanals verloren, sodass der Drei-Wege-Katalysator vergleichsweise früh nach einem Kaltstart des Verbrennungsmotors seine Light-Off-Temperatur erreicht. Durch den Abgasbrenner kann eine hohe Energiemenge in die Abgasanlage eingebracht werden, wodurch der Vier-Wege-Katalysator zeitnah nach einer Regenerationsanforderung auf seine Regenerationstemperatur aufgeheizt werden kann. Ferner kann der Abgasbrenner bei einem Kaltstart zum Heizen der Vier-Wege-Katalysatoren genutzt werden, damit der Vier-Wege-Katalysator zeitnah nach einem Kaltstart seine Light-Off-Temperatur erreicht und somit eine effiziente Konvertierung von Schadstoffen ermöglicht. Der Verbrennungsmotor ist vorzugsweise als mittels Zündkerzen fremdgezündeter Verbrennungsmotor nach dem Ottoprinzip ausführt.

In einer bekannten Lösung ist vorgesehen, dass der Vier-Wege-Katalysator oder der Partikelfilter in Unterbodenposition eines Kraftfahrzeuges angeordnet sind. Da insbesondere bei Partikelfiltern oder Vier-Wege-Katalysatoren in Unterbodenposition die zur Oxidation des Rußes benötigten Regenerationstemperaturen in niederlastigen Fahrzyklen nicht erreicht werden, ist es bei diesen Anordnungen besonders vorteilhaft, einen Abgasbrenner stromaufwärts des Vier-Wege-Katalysators oder des Partikelfilters anzuordnen, um unabhängig vom Abgas des Verbrennungsmotors eine Heizmöglichkeit zu schaffen. Ferner kann durch die Temperaturregulierung über den Abgasbrenner ein effektiver Bauteilschutz realisiert werden, da aufgrund der im Allgemeinen niedrigeren Temperaturen in der Unterbodenlage die Gefahr eines unkontrollierten Rußabbrands auf dem Vier-Wege-Katalysator oder dem Partikelfilter vermieden wird. Somit kann die Gefahr einer thermischen Beschädigung des Vier-Wege-Katalysators oder des Partikelfilters wirksam verringert werden.

In einer bekannten Lösung ist mit Vorteil vorgesehen, dass zwischen der Einleitstelle und dem Vier-Wege-Katalysator oder dem Partikelfilter eine Mischstrecke mit einer Länge von mindestens 30 cm, vorzugsweise von mindestens 50 cm ausgebildet ist. Dadurch wird eine bessere Durchmischung der Abgase des Abgasbrenners und des Verbrennungsmotors vor Eintritt in den Partikelfilter oder den Vier-Wege-Katalysator möglich, wodurch eine verbesserte Lambdaregelung für die Abgasnachbehandlung sowie eine gleichmäßigere Temperaturverteilung auf dem Vier-Wege-Katalysator oder Partikelfilter möglich sind. Dadurch können die Emissionen weiter gesenkt werden.

Gemäß einer bekannten Lösung ist vorgesehen, dass stromaufwärts des motornahen Drei-Wege-Katalysators eine erste Lambdasonde und unmittelbar stromaufwärts des Vier-Wege-Katalysators oder stromaufwärts des zweiten Drei-Wege-Katalysators eine zweite Lambdasonde im Abgaskanal angeordnet sind. Dadurch kann mit einem Lambdasondenpaar sowohl die Lambdaregelung des Verbrennungsmotors als auch die Regelung des Abgasbrenners erfolgen. Dabei ist eine kurze Gaslaufzeit vom Austritt des Abgasbrenners bis zur zweiten Lambdasonde vorteilhaft, wodurch eine besonders schnelle Regelung des Verbrennungsluftverhältnisses des Abgasbrenners möglich ist. Dabei ist die erste Lambdasonde vorzugsweise als Breitbandlambdasonde ausgeführt, um eine quantitative Aussage über den Sauerstoffgehalt im Abgas zu ermöglichen. Die zweite Lambdasonde kann als Sprung-Lambdasonde ausgeführt werden, um die Kosten zu reduzieren und somit eine qualitative Aussage über einen Sauerstoffüberschuss im Abgas zu liefern. Alternativ kann die zweite Lambdasonde auch als Breitbandsonde ausgeführt werden, um eine quantitative Regelung des Verbrennungsluftverhältnisses des Abgasbrenners zu ermöglichen.

Alternativ ist mit Vorteil vorgesehen, dass stromaufwärts des motornahen ersten Drei-Wege-Katalysators eine erste Lambdasonde und stromabwärts des Vier-Wege-Katalysators oder des zweiten Drei-Wege-Katalysators eine zweite Lambdasonde angeordnet ist. Diese Variante hat den Vorteil, dass es zu einer besseren Gasdurchmischung von Brennergas und Abgas des Verbrennungsmotors kommt und eine Bewertung der Endrohr-Emissionen des Verbrennungsmotors möglich ist.

Gemäß einer bekannten Lösung ist vorgesehen, dass stromaufwärts des Partikelfilters oder des Vier-Wege-Katalysators ein erster Drucksensor und stromabwärts des Partikelfilters oder Vier-Wege-Katalysators ein zweiter Drucksensor angeordnet sind. Dadurch kann mit einem Drucksensorpaar eine Differenzdruckmessung über den Partikelfilter ausgeführt werden, über welche ein Beladungszustand des Partikelfilters ermittelt werden kann. Somit kann auf Basis der Druckdifferenz eine Regeneration des Partikelfilters eingeleitet werden. Zudem kann eine On-Board-Diagnose des Partikelfilters durchgeführt werden. Alternativ kann die Regeneration durch ein in dem Steuergerät des Verbrennungsmotors abgelegtes Beladungsmodell des Partikelfilters oder des Vier-Wege-Katalysators gesteuert werden.

In einer bekannten Lösung ist vorgesehen, dass der Partikelfilter frei von einer Beschichtung, insbesondere frei von einer drei-Wege-katalytisch wirksamen Beschichtung oder einer Beschichtung zur selektiven katalytischen Reduktion von Stickoxiden, und/oder frei von einem Sauerstoffspeicher, insbesondere frei von einem Washcoat mit Sauerstoffspeicher-fähigkeit, ausgeführt ist. Dadurch kann eine alterungsbedingte Veränderung der Eigenschaften des Partikelfilters verhindert werden, sodass der Partikelfilter über seine Lebenszeit ein im Wesentlichen gleiches Verhalten aufweist. Da der Partikelfilter unmittelbar mit den heißen Abgasen des Abgasbrenners beaufschlagt wird, welche bei einem Partikelfilter mit einer katalytischen Beschichtung ansonsten zu einer verstärkten thermischen Alterung der katalytischen Beschichtung führen, ist eine unbeschichtete Ausführungsform des Partikelfilters vorteilhaft. Zudem kann durch den Verzicht auf eine Beschichtung der Partikelfilter mit weniger Zellen ausgeführt werden, wodurch die thermische Masse des Partikelfilters reduziert wird und ein Aufheizen des Partikelfilters begünstigt wird. Zudem wird zusätzlich der Abgasgegendruck reduziert, wodurch die Strömungsverluste in der Abgasanlage reduziert werden können und somit der Wirkungsgrad des Verbrennungsmotors gesteigert werden kann. Dies kann bei ansonsten unveränderten Rahmenbedingungen zu mehr Leistung oder einem verringerten Verbrauch genutzt werden. Zusätzlich können auf diese Art und Weise die thermische Masse des Partikelfilters reduziert und der Abgasgegendruck verringert und die Aschespeicherkapazität gegenüber einem beschichteten Partikelfilter erhöht werden. Durch die geringere thermische Masse wird zudem das Erreichen der Regenerationstemperatur des Partikelfilters erleichtert.

In einer bevorzugten Ausgestaltung des Abgasnachbehandlungssystems ist vorgesehen, dass die Sekundärluftpumpe über eine Luftleitung mit dem Abgasbrenner verbunden ist. Somit kann das Verbrennungsluftverhältnis das Abgasbrenners eingeregelt werden und eine entsprechend saubere und emissionsarme Verbrennung am Abgasbrenner sichergestellt werden. Zudem kann die Sekundärluftpumpe in den Regenerationsphasen des Vier-Wege-Katalysators oder des Partikelfilters, in denen die Brenngaszufuhr zum Abgasbrenner deaktiviert ist, den zur Oxidation des im Vier-Wege-Katalysator oder im Partikelfilter zurückgehaltenen Rußes notwendigen Sauerstoff liefern. Alternativ kann die Sekundärluftpumpe auch über eine zweite Luftleitung direkt mit dem Abgaskanal stromaufwärts des Vier-Wege-Katalysators oder des Partikelfilters verbunden sein.

Gemäß einer bekannten Lösung ist vorgesehen, dass der Abgasbrenner mit einem variablen Verbrennungsluftverhältnis betreibbar ist. Dadurch kann der Abgasbrenner Lambdaschwankungen, insbesondere einen unterstöchiometrischen Lambdabetrieb in der Kaltstartphase des Verbrennungsmotors ausgleichen und somit für ein stöchiometrisches Abgas stromabwärts der Einleitstelle für die heißen Brennergase des Abgasbrenners sorgen. Besonders bevorzugt ist dabei, wenn stromabwärts einer Einleitstelle des Abgasbrenners ein stöchiometrisches Abgas eingeregelt wird. Durch ein stöchiometrisches Abgas ist eine besonders effiziente Abgasnachbehandlung an einem stromabwärts der Einleitstelle liegenden Drei-Wege-Katalysator oder Vier-Wege-Katalysator möglich.

Erfindungsgemäß wird ein Verfahren zur Abgasnachbehandlung eines Verbrennungsmotors mit den Merkmalen des Anspruchs 1, insbesondere eines mittels Zündkerzen fremdgezündeten Verbrennungsmotors nach dem Ottoprinzip, mit einem Abgasnachbehandlungssystem vorgeschlagen welches folgende Schritte umfasst:
- Aufheizen des Vier-Wege-Katalysators oder des Partikelfilters durch Einleiten heißer Brennergase des Abgasbrenners auf eine Regenerationstemperatur, wobei stromabwärts des Vier-Wege-Katalysators oder stromabwärts des zweiten Drei-Wege-Katalysators ein stöchiometrisches Abgas eingeregelt wird,
- Abschalten des Abgasbrenners und Einblasen von Sekundärluft stromaufwärts des Vier-Wege-Katalysators oder des Partikelfilters, wobei der im Vier-Wege-Katalysator oder im Partikelfilter zurückgehaltene Ruß durch ein überstöchiometrisches Abgas oxidiert wird.

Durch ein erfindungsgemäßes Verfahren ist eine Regeneration des Vier-Wege-Katalysators oder des Partikelfilters, insbesondere bei einer Anordnung in einer Unterbodenlage eines Kraftfahrzeuges, im Wesentlichen unabhängig vom Lastzustand des Verbrennungsmotors möglich. Somit können der Vier-Wege-Katalysator oder der Partikelfilter auch bei typischem Schwachlastverkehr, wie beispielsweise im Stadtverkehr oder im Kurzstreckenbetrieb, regeneriert werden, wenn eine Regeneration allein durch innermotorische Maßnahmen unmöglich ist. Zudem können die Emissionen des Verbrennungsmotors auch während der Regeneration des Partikelfilters oder des Vier-Wege-Katalysators effektiv gemindert werden, da eine Abgasreinigung durch den ersten, motornahen Drei-Wege-Katalysator erfolgt und während der Sekundärlufteinblasung der Brenner abgeschaltet ist, sodass Sekundäremissionen bei der Regeneration des Partikelfilters oder des Vier-Wege-Katalysators minimiert werden.

Erfindungsgemäß ist vorgesehen, dass intermittierend solange zwischen einer Heizphase und einer Regenerationsphase gewechselt wird, bis der Vier-Wege-Katalysator oder der Partikelfilter vollständig regeneriert ist. Unter einer Heizphase ist in diesem Zusammenhang ein Betriebszustand zu verstehen, in dem der Abgasbrenner aktiv ist und das Abgas durch den Abgasbrenner aufgeheizt wird. Unter einer Regenerationsphase ist in diesem Zusammenhang ein Betriebszustand zu verstehen, bei dem der Abgasbrenner ausgeschaltet ist und Sekundärluft in den Abgaskanal stromaufwärts des Vier-Wege-Katalysators oder des Partikelfilters eingeblasen wird, um den zur Oxidation des im Vier-Wege-Katalysator oder Partikelfilter zurückgehaltenen Rußes benötigten Sauerstoff zu liefern. Da die Temperatur im Vier-Wege-Katalysator oder im Partikelfilter während der Regenerationsphase sinkt, wenn der Abgasbrenner abgeschaltet ist, führt das Absinken der Temperatur zu einem Abbruch der Oxidationsreaktion. Daher wird intermittierend zwischen einer Heizphase und einer Regenerationsphase gewechselt, um den Vier-Wege-Katalysator während des Regenerationsvorgangs über der Regenerationstemperatur zu halten und somit eine vollständige Regeneration des Vier-Wege-Katalysators oder des Partikelfilters zu ermöglichen. In einer bevorzugten Ausführungsform des Verfahrens ist vorgesehen, dass der Verbrennungsmotor sowohl während der Heizphase als auch während der Regenerationsphase mit einem stöchiometrischen Verbrennungsluftverhältnis betrieben wird. Dadurch ist während der Regeneration des Vier-Wege-Katalysators oder des Partikelfilters eine Konvertierung von schädlichen Abgaskomponenten durch den motornahen Drei-Wege-Katalysator möglich, sodass die Regeneration des Vier-Wege-Katalysators oder des Partikelfilters zu keinem Anstieg der Endrohremissionen führt.

In einer weiteren Verbesserung des Verfahrens ist vorgesehen, dass der Abgasbrenner nach einer Regenerationsphase, in welcher der Abgasbrenner abgeschaltet ist, solange mit einem unterstöchiometrischen Verbrennungsluftverhältnis, insbesondere mit einem Verbrennungsluftverhältnis zwischen 0,9 und 0,97 betrieben wird, bis ein Sauerstoffspeicher des Vier-Wege-Katalysators oder des Partikelfilters entleert ist. Durch den Sekundärluftbetrieb in der Regenerationsphase wird ein Sauerstoffspeicher des Vier-Wege-Katalysators oder des Partikelfilters gefüllt. Das kann bei einem erneuten Start des Abgasbrenners kurzfristig zu einem Emissionsdurchbruch der zu reduzierenden Abgaskomponenten, insbesondere von Stickoxiden, führen. Um einen solchen Durchbruch durch den Vier-Wege-Katalysator zu vermeiden, kann es angebracht sein, den Abgasbrenner beim Wiederstart kurzfristig mit einem fetten, unterstöchiometrischen Verbrennungsluftverhältnis zu betreiben, um den Sauerstoffspeicher auf dem Vier-Wege-Katalysator zu leeren und ein stöchiometrisches Abgas sicherzustellen. Dabei ist sicherzustellen, dass es während des Ausräumens des Sauerstoffspeichers zu keinem Durchbruch von unterstöchiometrischem Abgas durch die letzte katalytisch wirksame Abgasnachbehandlungskomponente der Abgasanlage kommt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit gleichen Bezugszeichen gekennzeichnet. Es zeigen:
- Figur 1: ein erstes Ausführungsbeispiel eines Verbrennungsmotors mit einem nicht erfindungsgemäßen Abgasnachbehandlungssystem;
- Figur 2: eine Variante eines nicht erfindungsgemäßen Abgasnachbehandlungssystems, bei dem die zweite Lambdasonde stromabwärts des Vier-Wege-Katalysators in Unterbodenlage angeordnet ist;
- Figur 3: eine weitere Variante eines nicht erfindungsgemäßen Abgasnachbehandlungssystems, bei dem die zweite Lambdasonde stromaufwärts des Vier-Wege-Katalysators in Unterbodenlage und eine dritte Lambdasonde stromabwärts des Vier-Wege-Katalysators in Unterbodenlage angeordnet sind;
- Figur 4: ein zweites Ausführungsbeispiel eines Verbrennungsmotors mit einem nicht erfindungsgemäßen Abgasnachbehandlungssystem, wobei das Abgasnachbehandlungssystem zusätzlich einen weiteren Drei-Wege-Katalysator stromabwärts des Vier-Wege-Katalysators in Unterbodenlage aufweist;
- Figur 5: ein drittes Ausführungsbeispiel eines Verbrennungsmotors mit einem nicht erfindungsgemäßen Abgasnachbehandlungssystem, wobei das Abgasnachbehandlungssystem einen unbeschichteten Partikelfilter und einen dem unbeschichteten Partikelfilter nachgeschalteten Drei-Wege-Katalysator in Unterbodenlage aufweist; und
- Figur 6: ein Diagramm, in welchem der Temperaturverlauf und das Abgasluftverhältnis in der Abgasanlage bei der Durchführung eines erfindungsgemäßen Verfahrens zur Abgasnachbehandlung dargestellt sind.

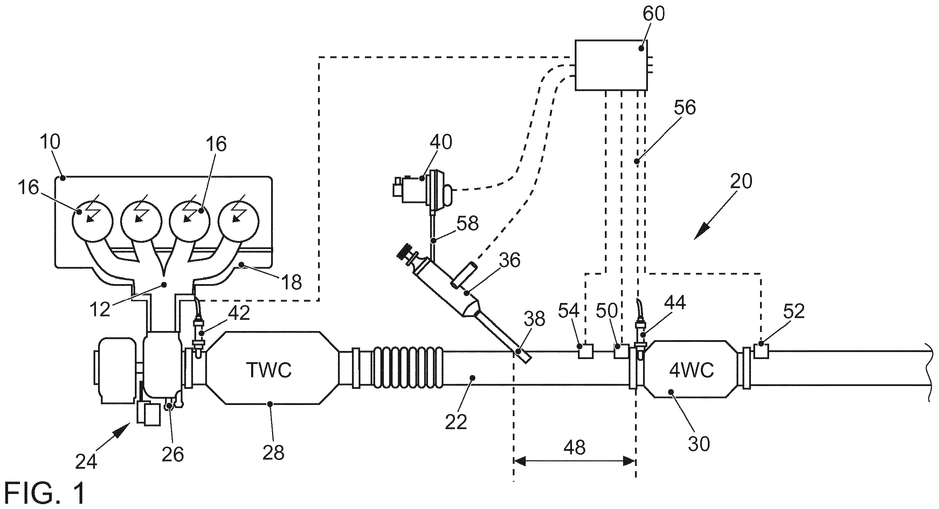

Figur 1 zeigt eine schematische Darstellung eines Verbrennungsmotors 10, dessen Auslass 12 mit einer Abgasanlage 20 verbunden ist. Der Verbrennungsmotor 10 ist als Ottomotor ausgeführt, welcher mittels Zündkerzen 16 fremdgezündet wird und weist mehrere Brennräume 14 auf. Der Verbrennungsmotor 10 ist vorzugsweise als mittels eines Abgasturboladers 24 aufgeladener Verbrennungsmotor 10 ausgeführt, wobei eine Turbine 26 des Abgasturboladers 24 stromabwärts des Auslasses 12 und stromaufwärts der ersten emissionsmindernden Abgasnachbehandlungskomponente, insbesondere stromaufwärts eines motornahen Drei-Wege-Katalysators 28, angeordnet ist. Die Abgasanlage 20 umfasst einen Abgaskanal 22, in dem in Strömungsrichtung eines Abgases durch den Abgaskanal 22 ein motornaher Drei-Wege-Katalysator 28 und stromabwärts des motornahen Drei-Wege-Katalysators 28 ein Vier-Wege-Katalysator 30 angeordnet sind. Der motornahe Drei-Wege-Katalysator 28 ist mit einem Abstand von weniger als 80 cm Abgaslauflänge, insbesondere von weniger als 50 cm Abgaslauflänge, ab dem Auslass 12 des Verbrennungsmotors 10 angeordnet. Der Vier-Wege-Katalysator 30 ist vorzugsweise in Unterbodenlage eines Kraftfahrzeuges und somit in einer motorfernen Position, das heißt mit einem Abstand von mehr als 100 cm Abgaslauflänge ab dem Auslass 12 des Verbrennungsmotors 10, angeordnet. Stromabwärts des motornahen ersten Drei-Wege-Katalysators 28 und stromaufwärts des Vier-Wege-Katalysators 30 ist eine Einleitstelle 38 für heiße Abgase eines Abgasbrenners 36 vorgesehen, über welche der stromabwärts der Einleitstelle 38 angeordnete Vier-Wege-Katalysator 30 unabhängig von der Betriebssituation des Verbrennungsmotors 10 aufgeheizt werden kann. Die Einleitstelle 38 ist von dem Vier-Wege-Katalysator 30 beabstandet, sodass sich zwischen der Einleitstelle 38 und dem Einlass des Vier-Wege-Katalysators 30 eine Mischstrecke 48 ergibt, in der sich das heiße Brennergas mit dem Abgas des Verbrennungsmotors 10 vermischt.

In der Abgasanlage 20 können zusätzlich weitere Katalysatoren, insbesondere ein weiterer Drei-Wege-Katalysator 34, ein NOx-Speicherkatalysator oder ein Katalysator zur selektiven katalytischen Reduktion von Stickoxiden angeordnet sein. Stromaufwärts des ersten Drei-Wege-Katalysators 28 ist im Abgaskanal 22 eine erste Lambdasonde 42 angeordnet, mit welcher der Sauerstoffgehalt λ₁ des Abgases stromabwärts des Auslasses 12 und stromaufwärts der ersten Abgasnachbehandlungskomponente, also des motornahen ersten Drei-Wege-Katalysators 28, ermittelt werden kann. Stromabwärts der Einleitstelle 38 und stromaufwärts des Vier-Wege-Katalysators 30 ist im Abgaskanal 22 eine zweite Lambdasonde 44 angeordnet, mit welcher der Sauerstoffgehalt λ₂ im Abgaskanal 28 unmittelbar stromaufwärts des Vier-Wege-Katalysators 30 ermittelt werden kann. Die erste Lambdasonde 42 ist vorzugsweise als Breitband-Lambdasonde aufgeführt und über eine erste Signalleitung 56 mit einem Steuergerät 60 des Verbrennungsmotors 10 verbunden. Die zweite Lambdasonde 44 ist vorzugsweise als Sprungsonde ausgeführt und über eine zweite Signalleitung 56 mit dem Steuergerät 60 verbunden. Die erste Lambdasonde 42 und die zweite Lambdasonde 44 bilden dabei eine Sensoranordnung aus, mit welcher das Verbrennungsluftverhältnis λ des Verbrennungsmotors 10 und des Abgasbrenners 36 geregelt werden können. Zusätzlich kann über die Sensoranordnung eine On-Board-Diagnose des ersten Drei-Wege-Katalysators 28 erfolgen.

Eine Sekundärluftpumpe 40 ist über eine Sekundärluftleitung 58 mit dem Abgasbrenner 36 verbunden. In der Sekundärluftleitung 58 kann ein Sekundärluftventil angeordnet sein, mit welchem die Luftzufuhr zu dem Abgasbrenner 36 hergestellt und unterbunden werden kann. Ferner sind stromaufwärts und stromabwärts des Vier-Wege-Katalysators 30 Drucksensoren 50, 52 vorgesehen, mit welchen eine Differenzdruckmessung über den Vier-Wege-Katalysator 30 zur Ermittlung des Beladungszustands des Vier-Wege-Katalysators 30 durchgeführt werden kann. Zudem kann über die Drucksensoren 50, 52 eine On-Board-Diagnose des Vier-Wege-Katalysators 30 erfolgen. Die Sekundärluftpumpe 40 kann zusätzlich über eine weitere Sekundärluftleitung mit einer weiteren Einleitstelle am Abgaskanal 22 verbunden sein, sodass die Sekundärluft unabhängig von dem Abgasbrenner 36 in den Abgaskanal 22 eingeleitet werden kann. Ferner können in der Abgasanlage 20 noch weitere Sensoren, insbesondere ein Temperatursensor 54 oder ein NOx-Sensor angeordnet sein, um die Verbrennung des Verbrennungsmotors 10 und/oder des Abgasbrenners 36 zu steuern.

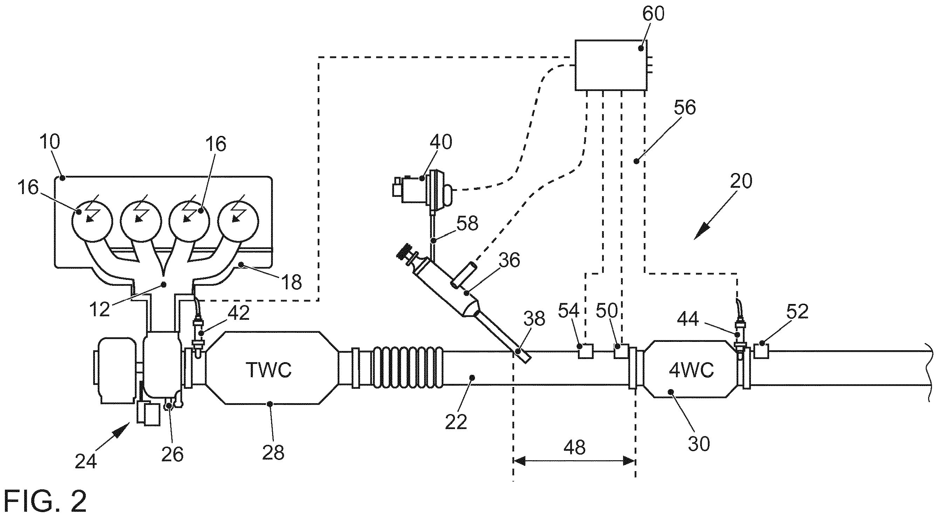

In Figur 2 ist eine Variante des Abgasnachbehandlungssystems aus Figur 1 dargestellt. Bei im Wesentlichen gleichem Aufbau ist die zweite Lambdasonde 44 in dieser Variante stromabwärts des Vier-Wege-Katalysators 30 angeordnet, wodurch das Abgasluftverhältnis stromabwärts des Vier-Wege-Katalysators 30 ermittelt werden kann. Der Vorteil dieser Variante liegt darin, dass eine bessere Gasdurchmischung von dem Brennergas und dem Abgas des Verbrennungsmotors 10 erfolgt und eine Bewertung des Endrohr-Lambda-Wertes möglich ist. Nachteilig an dieser Variante ist jedoch, dass das Signal durch die Sauerstoffspeicherfähigkeit des Vier-Wege-Katalysators 30 eine erhöhte Trägheit aufweist, wobei jede Regelabweichung der Lambdaregelung unmittelbar zu einer Erhöhung der Endrohremissionen führt.

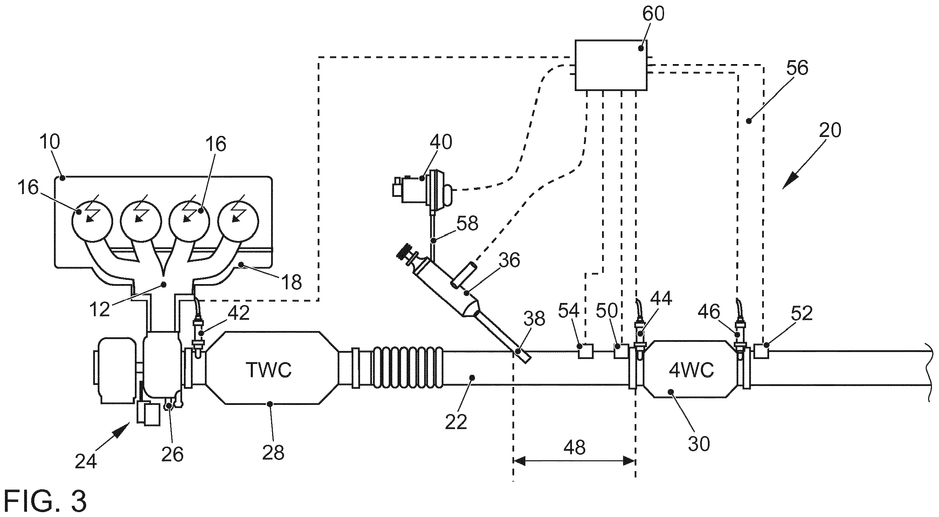

Figur 3 zeigt eine dritte Variante des Abgasnachbehandlungssystems. Bei im Wesentlichen gleichem Aufbau wie zu Figur 2 und Figur 3 dargestellt, ist in dieser Variante eine zweite Lambdasonde 44 unmittelbar stromaufwärts des Vier-Wege-Katalysators 30 und eine dritte Lambdasonde 46 stromabwärts des Vier-Wege-Katalysators 30 vorgesehen. Diese Variante hat den Vorteil, dass sich die Vorteile der beiden vorher genannten Varianten miteinander kombinieren lassen. Nachteilig ist jedoch, dass sich durch eine zusätzliche Lambdasonde die Komplexität der Regelung und die Kosten erhöhen.

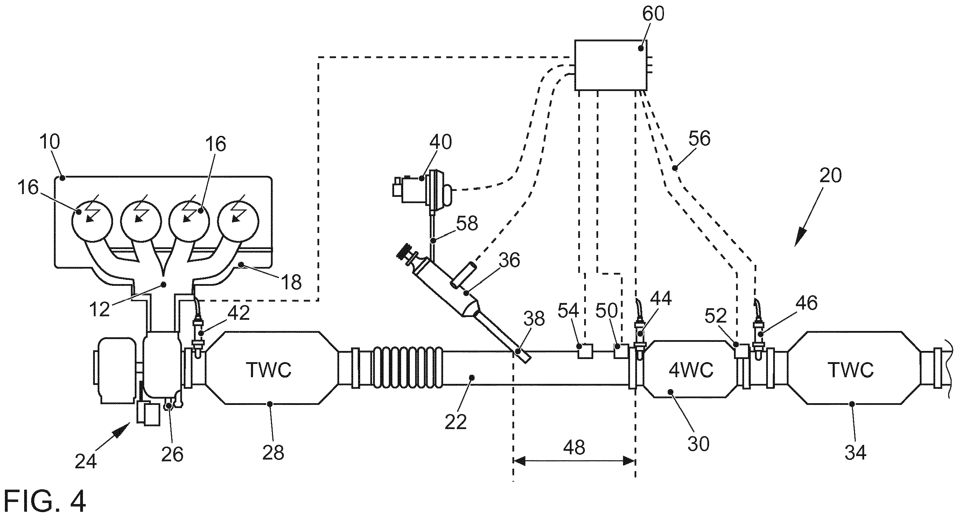

In Figur 4 ist ein weiteres Ausführungsbeispiel eines Verbrennungsmotors 10 mit einem Abgasnachbehandlungssystem dargestellt. Bei im Wesentlichen gleichem Aufbau wie zu Figur 1 bis 3 ausgeführt, ist im Abgaskanal 22 stromabwärts des Vier-Wege-Katalysators 30 ein weiterer Drei-Wege-Katalysator 34 angeordnet. Dadurch kann das Ziel eines stöchiometrischen Endrohrabgases während des Betriebs des Abgasbrenners 36 leichter erreicht werden, da ein weiteres Bauteil mit einem Sauerstoffspeicher vorhanden ist. Somit können Lambdadurchbrüche durch den Vier-Wege-Katalysator 30 durch die Sauerstoffspeicherfähigkeit des stromabwärts des Vier-Wege-Katalysators 30 angeordneten Drei-Wege-Katalysators 34 ausgeglichen werden. Dies führt zu einer weiteren Verbesserung der Endrohremissionen.

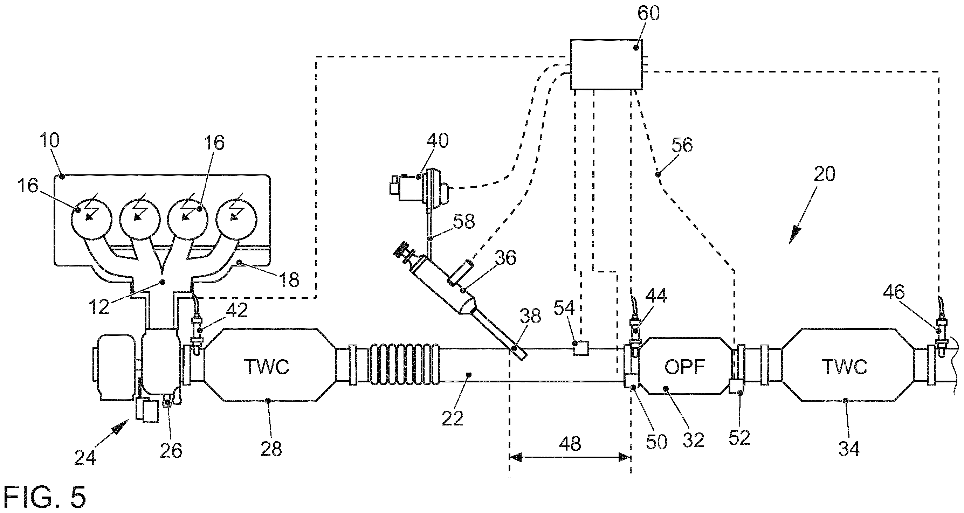

In Figur 5 ist ein weiteres Ausführungsbeispiel eines Verbrennungsmotors 10 dargestellt. Bei im Wesentlichen gleichem Aufbau wie zu Figur 4 ausgeführt, ist anstelle eines Vier-Wege-Katalysators 30 ein unbeschichteter Partikelfilter 32 in der Abgasanlage 20 vorgesehen. Dieses Ausführungsbeispiel hat den Vorteil, dass ein unbeschichteter Partikelfilter 32 leichter und kostengünstiger zu fertigen ist. Darüber hinaus altert ein unbeschichteter Partikelfilter 32 nicht, da er keine katalytische Beschichtung hat. Des Weiteren ist bei einem unbeschichteten Partikelfilter 32 der Abgasgegendruck geringer als bei einem Vier-Wege-Katalysator 30. Nachteilig gegenüber den in Figur 1 bis 3 dargestellten Ausführungsbeispielen ist jedoch, dass ein zusätzliches Bauteil in die Abgasanlage 20 integriert werden muss, was zu höherem Bauraumbedarf, höheren Kosten und einem höheren Abgasgegendruck führt.

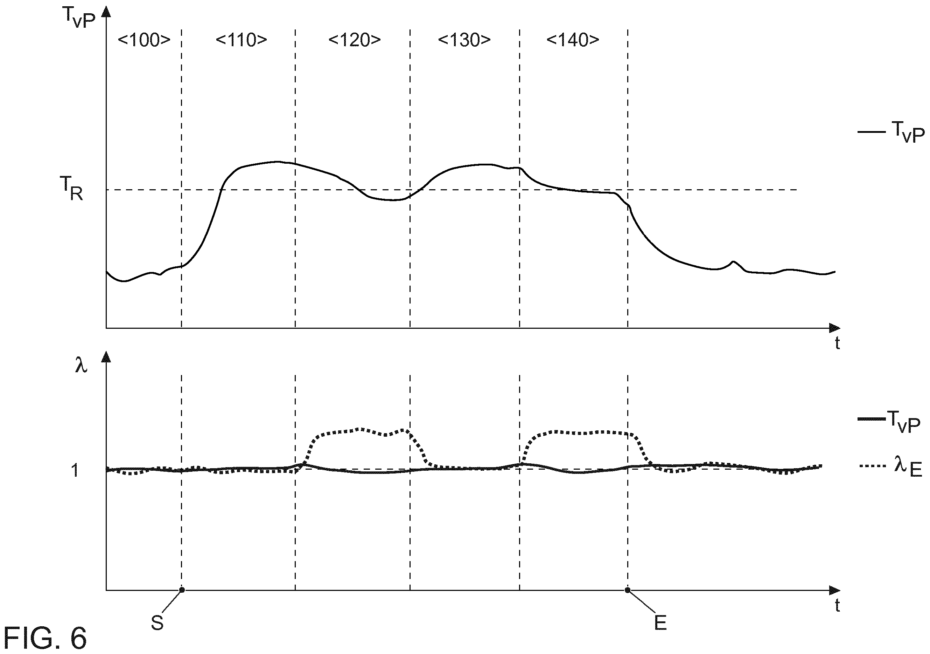

In Figur 6 ist der Temperaturverlauf vor dem Vier-Wege-Katalysator 30 oder dem Partikelfilter 32 während eines erfindungsgemäßen Verfahrens zur Abgasnachbehandlung dargestellt. Ferner zeigt Figur 6 das Abgasluftverhältnis λ stromaufwärts des motornahen Drei-Wege-Katalysators 28 (λ_{vT}) und stromabwärts des letzten katalytisch wirksamen Bauteils 30, 34 des Abgasnachbehandlungssystems (λ_{E}). Dabei wird der Verbrennungsmotor 10 stets mit einem stöchiometrischen Verbrennungsluftverhältnis λ = 1 betrieben, sodass die bei der innermotorischen Verbrennung auftretenden Schadstoffemissionen durch den motornahen Drei-Wege-Katalysator 28 konvertiert werden können. In einem ersten Verfahrensschritt <100> wird der Verbrennungsmotor 10 mit einem stöchiometrischen Verbrennungsluftverhältnis betrieben und der Abgasbrenner 36 und die Sekundärluftpumpe 40 sind deaktiviert. Wird durch das Steuergerät 60 des Verbrennungsmotors 10 eine Regeneration des Vier-Wege-Katalysators 30 oder des Partikelfilters 32 angefordert, wird diese zu einem Zeitpunkt S gestartet. Ein solcher Start der Regeneration kann über ein Beladungsmodell des Vier-Wege-Katalysators 30 oder des Partikelfilters 32 oder über eine Differenzdruckmessung initiiert werden. Dabei wird der Abgasbrenner 36 in einem Verfahrensschritt <110> zum Heizen des Partikelfilters 32 oder des Vier-Wege-Katalysators 30 aktiviert, wobei ein stöchiometrisches Abgasluftverhältnis λ_{E} stromabwärts des Vier-Wege-Katalysators 30 oder stromabwärts des zweiten Drei-Wege-Katalysators 34 von λ_{E} = 1 eingeregelt wird. Hat der Vier-Wege-Katalysator 30 oder der Partikelfilter 32 eine Temperatur oberhalb der Regenerationstemperatur T_{R} erreicht, wird in einem Verfahrensschritt <120> der Abgasbrenner 36 deaktiviert und mithilfe der Sekundärluftpumpe 40 Luft in den Abgaskanal 22 stromaufwärts des Vier-Wege-Katalysators 30 oder des Partikelfilters 32 eingeblasen. Der Verbrennungsmotor 10 wird in dieser Regenerationsphase weiterhin mit einem stöchiometrischen Verbrennungsluftverhältnis λ = 1 betrieben, wodurch die innermotorischen Emissionen weiterhin durch den motornahen ersten Drei-Wege-Katalysator 28 konvertiert werden. Ziel der Sekundärlufteinblasung ist ein leichter Luftüberschuss im Bereich von 1,05 < λ < 1,2 stromaufwärts des Vier-Wege-Katalysators 30 oder des Partikelfilters 32 zur Regeneration des eingelagerten Rußes. Dadurch wird eine effektive Regeneration des Vier-Wege-Katalysators 30 oder des Partikelfilters 32 sichergestellt. Darüber hinaus wird so effektiv vermieden, dass ein unkontrollierter Rußabbrand zu einer Beschädigung des Vier-Wege-Katalysators 30 oder des Partikelfilters 32 führt. Da sich durch die Sekundärlufteinblasung der Vier-Wege-Katalysator 30 oder der Partikelfilter 32 wieder abkühlt, wird der Abgasbrenner 36 in einem Verfahrensschritt <130> wieder aktiviert und der Vier-Wege-Katalysator 30 oder der Partikelfilter 32 erneut aufgeheizt. Das Verbrennungsluftverhältnis des Verbrennungsmotors 10 ist dieser Phase wieder stöchiometrisch. Das Verbrennungsluftverhältnis des Abgasbrenners 36 ist stöchiometrisch oder leicht fett, sodass keine Regeneration des Vier-Wege-Katalysators 30 oder des Partikelfilters 32 erfolgt. Dabei kann es vorteilhaft sein, wenn der Abgasbrenner 36 mit einem leicht unterstöchiometrischen, fetten Verbrennungsluftverhältnis betrieben wird, bis der Sauerstoffspeicher (OSC) des Vier-Wege-Katalysators 30 ausgeräumt ist, um einen Emissionsdurchbruch der zu reduzierenden Abgasbestandteile, insbesondere von Stickoxiden, zu vermeiden. Dieser intermittierende Betrieb wird so lange aufrechterhalten, bis der Vier-Wege-Katalysator 30 oder der Partikelfilter 32 regeneriert ist. Dazu schließt sich an die zweite Heizphase <130> eine erneute Regenerationsphase <140> an, in welcher der Abgasbrenner 36 wieder deaktiviert ist und über die Sekundärluftpumpe 40 Sekundärluft in den Abgaskanal 22 eingeblasen wird. Das Ende der Regeneration wird über ein Beladungsmodell oder eine Differenzdruckmessung über die beiden Drucksensoren 50, 52 gesteuert.

Zusammenfassend lässt sich festhalten, dass durch das beschriebene erfindungsgemäße Verfahren in allen Fahrzyklen das Erreichen einer Regenerationstemperatur des Partikelfilters 32 oder des Vier-Wege-Katalysators 30 sichergestellt werden kann und eine möglichst emissionsfreie Regeneration des Partikelfilters 32 oder des Vier-Wege-Katalysators 30 ermöglicht wird.

### Bezugszeichenliste

- 10: Verbrennungsmotor
- 12: Auslass
- 14: Brennraum
- 16: Zündkerze
- 18: Zylinderkopf

- 20: Abgasanlage
- 22: Abgaskanal
- 24: Abgasturbolader
- 26: Turbine
- 28: motornaher Drei-Wege-Katalysator

- 30: Vier-Wege-Katalysator
- 32: unbeschichteter Partikelfilter
- 34: zweiter Drei-Wege-Katalysator
- 36: Abgasbrenner
- 38: Einleitstelle

- 40: Sekundärluftpumpe
- 42: erste Lambdasonde
- 44: zweite Lambdasonde
- 46: dritte Lambdasonde
- 48: Mischstrecke

- 50: erster Drucksensor
- 52: zweiter Drucksensor
- 54: Temperatursensor
- 56: Signalleitung
- 58: Luftleitung

- 60: Steuergerät
- <100>: stöchiometrischer Normalbetrieb des Verbrennungsmotors
- <110>: Heizphase
- <120>: erste Regenerationsphase
- <130>: Heizphase
- <140>: zweite Regenerationsphase

- E: Ende der Regeneration des Partikelfilters oder des Vier-Wege-Katalysators
- S: Start der Regeneration des Partikelfilters oder des Vier-Wege-Katalysators
- T_{vP}: Temperatur vor Partikelfilter oder Vier-Wege-Katalysator
- T_{R}: Regenerationstemperatur des Partikelfilters oder Vier-Wege-Katalysators
- λ: Abgasluftverhältnis
- λ_{E}: Abgasluftverhältnis stromabwärts der letzten katalytisch wirksamen Abgasnachbehandlungskomponente
- λ_{vT}: Abgasluftverhältnis stromaufwärts des motornahen Drei-Wege-Katalysators

## Patentansprüche

1. Verfahren zur Abgasnachbehandlung eines Verbrennungsmotors (10) mit einem Abgasnachbehandlungssystem zur Abgasnachbehandlung des Verbrennungsmotors (10), mit einer Abgasanlage (20), welche mit einem Auslass (12) des Verbrennungsmotors (10) verbunden ist, wobei die Abgasanlage (20) einen Abgaskanal (22) umfasst, in dem in Strömungsrichtung eines Abgases des Verbrennungsmotors (10) durch den Abgaskanal (22) als erste emissionsmindernde Komponente ein motornaher Drei-Wege-Katalysator (28) und stromabwärts des motornahen Drei-Wege-Katalysators (28) ein Vier-Wege-Katalysator (30) oder eine Kombination aus einem Partikelfilter (32) und einem dem Partikelfilter (32) nachgeschalteten zweiten Drei-Wege-Katalysator (34) angeordnet sind, wobei das Abgasnachbehandlungssystem eine Sekundärluftpumpe (40) und einen Abgasbrenner (36) umfasst, wobei stromabwärts des motornahen Drei-Wege-Katalysators (28) und stromaufwärts des Vier-Wege-Katalysators (30) oder des Partikelfilters (32) mindestens eine Einleitstelle (38) vorgesehen ist, an welcher die heißen Abgase des Abgasbrenners (36) zur Erwärmung des Vier-Wege-Katalysators (30) oder des Partikelfilters (32) in die Abgasanlage (20) einleitbar sind,, umfassend folgende Schritte:
- Aufheizen des Vier-Wege-Katalysators (30) oder des Partikelfilters (32) durch Einleiten heißer Brennergase des Abgasbrenners (36) auf eine Regenerationstemperatur (T_{R}), wobei stromabwärts des Vier-Wege-Katalysators (30) oder stromabwärts des zweiten Drei-Wege-Katalysators (34) ein stöchiometrisches Abgas eingeregelt wird,
- Abschalten des Abgasbrenners (36) und Einblasen von Sekundärluft stromaufwärts des Vier-Wege-Katalysators (30) oder des Partikelfilters (32), wobei der im Vier-Wege-Katalysator (30) oder im Partikelfilter (32) zurückgehaltene Ruß durch ein überstöchiometrisches Abgas (λ > 1) oxidiert wird,
- Intermittierendes Wechseln zwischen einer Heizphase, in der der Abgasbrenner (36) aktiv ist und das Abgas durch den Abgasbrenner (36) aufgeheizt wird und einer Regenerationsphase, bei der der Abgasbrenner (36) ausgeschaltet ist und Sekundärluft in den Abgaskanal (22) stromaufwärts des Vier-Wege-Katalysators (30) oder des Partikelfilters (32) eingeblasen wird, um den zur Oxidation des im Vier-Wege-Katalysator (30) oder im Partikelfilter (32) zurückgehaltenen Rußes benötigten Sauerstoff zu liefern, bis der Vier-Wege-Katalysator (30) oder der Partikelfilter (32) vollständig regeneriert ist.

2. Verfahren zur Abgasnachbehandlung nach Anspruch 1, **dadurch gekennzeichnet, dass** der Verbrennungsmotor (10) sowohl während der Heizphase als auch während der Regenerationsphase mit einem stöchiometrischen Verbrennungsluftverhältnis (λ = 1) betrieben wird.

3. Verfahren zur Abgasnachbehandlung nach einem der Ansprüche 1 oder 2, **dadurch gekennzeichnet, dass** der Abgasbrenner (36) nach einer Regenerationsphase, in welcher der Abgasbrenner (36) abgeschaltet ist, solange mit einem unterstöchiometrischen Verbrennungsluftverhältnis betrieben wird, bis ein Sauerstoffspeicher (OSC) des Vier-Wege-Katalysators (30) oder des Partikelfilters (32) entleert ist.

## Claims

1. Method for treating the waste gas of a combustion engine (10) with a waste gas treatment system for treating the waste gas of the combustion engine (10), with a waste gas system (20) which is connected to an outlet (12) of the combustion engine (10), wherein the waste gas system (20) comprises a waste gas channel (22) in which, in the flow direction of a waste gas of the combustion engine (10) through the waste gas channel (22), a three-way catalytic converter (28) is arranged close-coupled to the engine as the first emissions-lowering component, and downstream of the close-coupled three-way catalytic converter (28) is arranged a four-way catalytic converter (30) or a combination of a particle filter (32) and a second three-way catalytic converter (34) installed downstream of said particle filter (32); wherein the waste gas treatment system comprises a secondary air pump (40) and a waste gas burner (36); wherein, downstream of the close-coupled three-way catalytic converter (28) and upstream of the four-way catalytic converter (30) or of the particle filter (32), at least one discharge point (38) is provided at which the hot waste gases of the waste gas burner (36) can be introduced into the waste gas system (20) to heat the four-way catalytic converter (30) or the particle filter (32), comprising the following steps:
- heating the four-way catalytic converter (30) or the particle filter (32) to a regeneration temperature (T_{R}) by introducing hot burner gases of the waste gas burner (36), wherein a stoichiometric waste gas is adjusted downstream of the four-way catalytic converter (30) or downstream of the second three-way catalytic converter (34),
- switching off the waste gas burner (36) and blowing in secondary air upstream of the four-way catalytic converter (30) or of the particle filter (32), wherein the soot retained in the four-way catalytic converter (30) or in the particle filter (32) is oxidized by a super-stoichiometric waste gas (λ > 1),
- intermittently alternating between a heating phase, in which the waste gas burner (36) is active and the waste gas is heated by the waste gas burner (36), and a regeneration phase, in which the waste gas burner (36) is switched off and secondary air is blown into the waste gas channel (22) upstream of the four-way catalytic converter (30) or of the particle filter (32), in order to supply the oxygen necessary for oxidizing the soot retained in the four-way catalytic converter (30) or in the particle filter (32), until the four-way catalytic converter (30) or the particle filter (32) is completely regenerated.

2. Method for treating waste gas according to claim 1, **characterized in that** the combustion engine (10) is operated at a stoichiometric combustion air ratio (A = 1) during both the heating phase and the regeneration phase.

3. Method for treating waste gas according to one of claims 1 or 2, **characterized in that**, after a regeneration phase in which the waste gas burner (36) is switched off, the exhaust gas burner (36) is operated at a sub-stoichiometric combustion air ratio until an oxygen storage capacity (OSC) of the four-way catalytic converter (30) or of the particle filter (32) is emptied.

## Revendications

1. Procédé de retraitement des gaz d'échappement d'un moteur à combustion interne (10) comprenant un système de retraitement des gaz d'échappement pour le retraitement des gaz d'échappement du moteur à combustion interne (10), comprenant une installation de gaz d'échappement (20), laquelle est raccordée à une sortie (12) du moteur à combustion interne (10), l'installation de gaz d'échappement (20) comprenant un canal de gaz d'échappement (22), dans lequel, dans le sens du débit d'un gaz d'échappement du moteur à combustion interne (10) à travers le canal de gaz d'échappement (22), est disposé un catalyseur à trois voies (28) proche du moteur comme premier composant de réduction d'émission et, en aval du catalyseur à trois voies (28) proche du moteur, un catalyseur à quatre voies (30) ou une combinaison d'un filtre à particules (32) et d'un deuxième catalyseur à trois voies (34) raccordé en aval du filtre à particules (32), le système de retraitement des gaz d'échappement comprenant une pompe à air secondaire (40) et un brûleur de gaz d'échappement (36), en aval du catalyseur à trois voies (28) proche du moteur et en amont du catalyseur à quatre voies (30) ou du filtre à particules (32) au moins un point d'introduction(38) étant prévu, au niveau duquel les gaz d'échappement chauds du brûleur de gaz d'échappement (36) peuvent être introduits dans l'installation de gaz d'échappement (20) pour le réchauffement du catalyseur à quatre voies (30) ou du filtre à particules (32), comprenant les étapes suivantes :
- chauffage du catalyseur à quatre voies (30) ou du filtre à particules (32) par l'introduction de gaz de brûleur chauds du brûleur de gaz d'échappement (36) à une température de régénération (T_{R}), un gaz d'échappement stœchiométrique étant réglé en aval du catalyseur à quatre voies (30) ou en aval du deuxième catalyseur à trois voies (34),
- désactivation du brûleur de gaz d'échappement (36) et soufflage d'air secondaire en amont du catalyseur à quatre voies (30) ou du filtre à particules (32), la suie retenue dans le catalyseur à quatre voies (30) ou dans le filtre à particules (32) étant oxydée par un gaz d'échappement sur-stœchiométrique (λ > 1),
commutation intermittente entre une phase de chauffage, dans laquelle le brûleur de gaz d'échappement (36) est actif et le gaz d'échappement est chauffé par le brûleur de gaz d'échappement (36), et une phase de régénération, dans laquelle le brûleur de gaz d'échappement (36) est éteint et de l'air secondaire est soufflé dans le canal de gaz d'échappement (22) en amont du catalyseur à quatre voies (30) ou du filtre à particules (32), pour fournir l'oxygène requis pour l'oxydation de la suie retenue dans le catalyseur à quatre voies (30) ou dans filtre à particules (32), jusqu'à ce que le catalyseur à quatre voies (30) ou le filtre à particule (32) soit complément régénéré.

2. Procédé de retraitement des gaz d'échappement selon la revendication 1, **caractérisé en ce que** le moteur à combustion interne (10) fonctionne avec un rapport d'air de combustion stœchiométrique (λ = 1), durant la phase de chauffage comme durant la phase de régénération.

3. Procédé de retraitement des gaz d'échappement selon l'une quelconque des revendications 1 ou 2, **caractérise en ce que** le brûleur de gaz d'échappement (36), après une phase de régénération dans laquelle le brûleur de gaz d'échappement (36) est éteint, fonctionne avec un rapport d'air de combustion sous-stœchiométrique jusqu'à ce qu'un réservoir d'oxygène (OSC) du catalyseur à quatre voies (30) ou du filtre à particules (32) soit vidé.
